Europäisches Patentamt

European Patent Office

Office européen des brevets

(11) Veröffentlichungsnummer: **0 464 540 A1**

# (12) EUROPÄISCHE PATENTANMELDUNG

(21) Anmeldenummer: **91110327.3**

(22) Anmeldetag: **22.06.91**

(51) Int. Cl.5: **C08L 25/12**, C08L 33/20, C08L 35/06

(30) Priorität: **06.07.90 DE 4021646**

(43) Veröffentlichungstag der Anmeldung:
**08.01.92 Patentblatt 92/02**

(84) Benannte Vertragsstaaten:
**DE ES FR GB IT NL**

(71) Anmelder: **BAYER AG**

**W-5090 Leverkusen 1 Bayerwerk(DE)**

(72) Erfinder: **Lütjens, Holger, Dr.**
**Rybniker Strasse 12**
**W-5000 Köln 80(DE)**
Erfinder: **Plaetschke, Rüdiger, Dr.**
**Am Thelenhof 18**
**W-5090 Leverkusen 1(DE)**
Erfinder: **Lindner, Christian, Dr.**
**Im Wasserblech 11**
**W-5000 Köln 91(DE)**

(54) **Polymerlegierungen.**

(57) Gegenstand der Erfindung sind Polymerlegierungen aus
a) 30 bis 50 Gew.-% eines Copolymerisats von
35 bis 55 Gew.-% Maleinsäureanhydrid und
65 bis 45 Gew.-% Styrol und
b) 50 bis 70 Gew.-% eines Copolymerisats von
65 bis 40 Gew.-% Styrol, $\alpha$-Methylstyrol oder Mischungen davon und
35 bis 60 Gew.-% Acrylnitril.

EP 0 464 540 A1

Gegenstand der Erfindung sind Polymerlegierungen aus

a) 30 bis 50 Gew.-% eines Copolymerisats von

35 bis 55 Gew.-% Maleinsäureanhydrid und

65 bis 45 Gew.-% Styrol und

b) 50 bis 70 Gew.-% eines Copolymerisats von

65 bis 40 Gew.-% Styrol, $\alpha$-Methylstyrol oder Mischungen davon und

35 bis 60 Gew.-% Acrylnitril.

Diese Legierungen zeichnen sich durch Verträglichkeit ihrer Bestandteile sowie durch thermoplastische Verarbeitbarkeit, hohe Transparenz und verbesserte Wärmestandfestigkeit (im Vergleich zum Styrol/Acrylnitril-Copolymerisat) aus. Die Bestandteile der Legierung und ihre Herstellung sind bekannt. Die Legierung selbst kann nach grundsätzlich bekannten Methoden hergestellt werden.

Copolymerisate von Maleinsäureanhydrid und Styrol sind bekannt. Im allgemeinen bilden sich "alternierende" Copolymerisate, in denen auf jeden Styrolrest ein Maleinsäureanhydridrest folgt. Diese Copolymerisate enthalten 50 Mol-% (51,5 Gew.-%) Styrolreste und 50 Mol-% (48,5 Gew.-%) Maleinsäureanhydridreste. Durch besondere Verfahren ist es möglich, Copolymerisate dieser Art mit weniger (bis 35 Gew.-%) Maleinsäureanhydrideinheiten herzustellen.

Allen Copolymerisaten von Maleinsäureanhydrid und Styrol mit hohen Gehalten an Maleinsäureanhydrid ist gemeinsam, daß sie eine sehr hohe Glasübergangstemperatur besitzen (über 200° C) und das sie nicht thermoplastisch, d.h. durch Verformen ihrer Schmelzen verarbeitet werden können, weil sie sich bereits unterhalb ihrer Schmelztemperatur zersetzen und/oder weil die Schmelzen nicht hinreichend fließfähig sind. Maleinsäureanhydrid-Styrol-Copolymerisate mit hohen Gehalten an Maleinsäureanhydrid sind also bisher nicht als thermoplastische Formmassen verwendbar.

Die Copolymerisate von Styrol und/oder $\alpha$-Methylstyrol und Acrylnitril, die den zweiten Bestandteil der erfindungsgemäßen Legierung bilden, sind ebenfalls bekannt. Es handelt sich um Polymerisate mit einem relativ hohen Anteil an Acrylnitrileinheiten.

Der vorliegenden Erfindung liegt die Erkenntnis zugrunde, daß Maleinsäureanhydrid-Styrol-Copolrnerisate mit hohen Gehalten an Maleinsäureanhydrid und Styrol-($\alpha$-Methylstyrol)-Acrylnitril-Copolymerisate miteinander verträglich sind und das sie thermoplastisch verarbeitbare Legierungen mit besonders günstigen Eigenschaften geben.

Besonders gut geeignete Legierungen sind dabei solche, in denen in den Komponenten a) und b) die Gewichtsmenge an Maleinsäureanhydridresten und die Gewichtsmenge Acrylnitrilreste gleich sind oder jedenfalls sich nicht mehr als 12 Gew.-%, insbesondere 10 Gew.-%, voneinander unterscheiden, wobei die Acrylnitril- und Maleinsäureanhydrid-Gehalte größer/gleich 35 Gew.-%, insbesondere 40 Gew.-%, sind.

Die Molekulargewichte der Legierungsbestandteile a) und b) sind unkritisch. Bevorzugt besitzt a) Staudinger-Indices von 0,10 bis 1,00 dl/g und b) Staudinger-Indices von 0,10 bis 0,80 dl/g (gemessen in Dimethylformamid).

Das Polymer a) kann durch radikalische Polymerisation in organischen Flüssigkeiten wie Ketonen, Aromaten, flüssigen Amiden hergestellt werden. Wenn die Monomeren im Molverhältnis 1:1 verwendet werden, reicht normalerweise eine diskontinuierliche Polymerisationsführung aus. Die Polymeren fallen dann als Lösungen oder Suspensionen an, aus denen sie durch übliche Fällung oder Filtration isoliert werden können. Bei anderen Molverhältnissen muß man kontinuierliche Verfahren mit genau kontrolliertem Monomerenzulauf benutzen.

Die Polymeren b) können durch übliche radikalische Copolymerisation der Monomeren hergestellt werden, insbesondere durch Emulsionspolymerisation, Suspensionspolymerisation, Lösungspolymerisation oder Massepolymerisation. Halb- oder vollkontinuierliche Verfahren sind bevorzugt, um eine ausreichende chemische Einheitlichkeit des Polymeren b) zu gewährleisten.

Die erfindungsgemäßen Legierungen kann man durch Mischen von Lösungen der Bestandteile in einem geeigneten Lösungsmittel für die Polymeren a) und b) und anschließendes Fällen oder Ausdampfen herstellen, oder durch Mischen einer Lösung von b) mit einer Schmelze von a) und anschließendes Ausdampfen. Geeignete Lösungsmittel sind im Prinzip alle, die die Polymeren a) und b) bei Temperaturen von 20 bis ca. 150° C lösen, insbesondere Aromaten wie Toluol, Ethylbenzol, Chlorbenzol oder Ketone wie Aceton, Methylethylketon.

Bevorzugt arbeitet man mit Ethylbenzol als Lösungsmittel und isoliert über Kneter oder Schnecken mit Ausdampfmöglichkeit.

Die Polymerlegierungen der Erfindung besitzen hohe Stabilität gegen Alterung und bei thermoplastischer Verarbeitung. Sie lassen sich im geschmolzenen Zustand zu Formkörpern jeder Art verarbeiten, wobei gute Transparenz, Farbhaltung und Oberflächenqualität zu bemerken ist.

Die Legierungen zeigen eine bessere Wärmestandfestigkeit als die Komponente b) alleine.

Beispiele

1. Styrol-Maleinsäureanhydrid-Copolymerisate

1.1 Ein Copolymerisat aus 50 Mol-% Maleinsäureanhydrid und 50 Mol-% Styrol wird hergestellt, indem man 98 Gew.-Teile Maleinsäureanhydrid in 400 Gew.-Teilen Toluol bei einer Temperatur von 60 bis 70°C in einem Reaktor vorlegt. Nach Initiierung mit 0,7 Gew.-Teilen Azoisobuttersäurenitril werden 104 Gew.-Teile Styrol innerhalb von 3 Stunden bei 60 bis 70°C zudosiert. Das bei der Polymerisation gebildete Polymerisat fällt im Reaktor aus und kann nach beendeter Polymerisation abfiltriert und gewaschen werden. Das Polymerisat enthält 48,5 Gew.-% Maleinsäureanhydrideinheiten und besitzt einen Staudinger-Index von [n] = 0,22 dl/g, gemessen in Dimethylformamid.

1.2 Als Vergleich wird ein Styrol-MaleinsäureanhydridCopolymerisat mit einem Maleinsäureanhydridgehalt von 15 Gew.-% verwendet, hergestellt über kontinuierliche Lösungspolymerisation $[\eta]$ = 0,29 dl/g, gemessen in Dimethylformamid.

2. Styrol-Acrylnitril-Copolymerisate

In einem Reaktor werden 1000 Gew.-Teile Wasser, 4 Gew.-Teile 1n-Natronlauge und 5 Gew.-Teile disproportionierte Abietinsäure vorgelegt. Bei einer Temperatur von 70°C werden 70 Gew.-Teile der unten angegebenen Monomerlösung in den Reaktor eingegeben. Nach Initiierung mit 3 Gew.-Teilen Kaliumpersulfat in 50 Gew.-Teilen Wasser werden innerhalb von 4 Stunden in den Reaktor eingespeist:

```
Monomerlösung: Styrol        ⎧ im Gew.-    ⎫   830 Gew.-Tle.
               Acrylnitril  ⎨ Verhältnis  ⎬
                            ⎩ der Tab. 1  ⎭

               Dodecyl-                       2 Gew.-Tle
               mercaptan


Emulgatorlösung: disproportionierte
                 Abietinsäure            20 Gew.-Tle.
                 1n-Natronlauge          15 Gew.-Tle.
                 Wasser                 600 Gew.-Tle.
```

Danach wird noch 4 Stunden nachpolymerisiert. Die Polymerisate werden aus den Emulsionen durch Koagulation isoliert, gewaschen und getrocknet.

Verwendete Monomermischungen:

| Versuch | Styrol | Acrylnitril | Acrylnitrilgehalt |
| --- | --- | --- | --- |
| | Gew.-Teile | | i. Polymer |
| 2.1 | 468 | 432 | 47 % |
| 2.2 | 513 | 387 | 42 % |
| 2.3 | 558 | 342 | 38 % |
| 2.4 | 603 | 297 | 32 % |
| 2.5 | 648 | 252 | 27 % |

Die Polymerisate besitzen Staudinger-Indices von $[\eta]$ 0,60 dg/l, gemessen in Dimethylformamid.

3. Herstellung der Polymerlegierungen

Die Styrol-Maleinsäureanhydrid-Copolymere werden in Aceton gelöst. Die Lösungen sind 40 %ig.
Die Styrol-Acrylnitril-Copolymerisate werden ebenfalls in Aceton gelöst. Die Lösungen sind 25 %ig.
Die Lösungen der Styrol-Maleinsäureanhydrid-Copolymerisate und der Styrol-Acrylnitril-Copolymerisate werden gemischt, so daß die Mischungen 30 bis 50 Gew.-% Styrol-Maleinsäureanhydrid-Copolymerisat und 70 bis 50 Gew.-% Styrol-Acrylnitrilcopolymerisat enthalten. Die Polymerlegierungen werden durch Lösungsmittelausdampfung erhalten.

Polymerlegierungen

Bestandteile:

| 1.1 | 1.2 | 2.1 | 2.2 | 2.3 | 2.4 | 2.5 | Mischungsbezeichnung |
| --- | --- | --- | --- | --- | --- | --- | --- |
| x | | x | | | | | 3.1 |
| x | | | x | | | | 3.2 |
| x | | | | x | | | 3.3 |
| x | | | | | x | | 3.4 |
| x | | | | | | x | 3.5 |
| | x | x | | | | | 3.6 |
| | x | | x | | | | 3.7 Vergleich |
| | x | | | x | | | 3.8 |
| | x | | | | x | | 3.9 |
| | x | | | | | x | 3.10 |

Aus den Polymerlegierungen 3.1 bis 3.10, die die Polymerisation im Gewichtsverhältnis der Zusammensetzung 30/70 bzw. 50/50 enthalten, werden aus Dimethylformamid Folien hergestellt (Schichtdicke 200 µm). Ergebnis:

Aussehen der Folien

aus Mischung 3.1
aus Mischung 3.2      transparent/glasklar
aus Mischung 3.3

aus Mischung 3.4
aus Mischung 3.5
aus Mischung 3.6
aus Mischung 3.7      trübe bis opak
aus Mischung 3.8
aus Mischung 3.9
aus Mischung 3.10

Die Polymermischungen 3.1 bis 3.10 werden zusätzlich bei 190 °C über Walzenaggregate zu Formkörpern einer Größe 10 x 10 x 0,2 cm umgewandelt. Nur im Fall der Mischungen 3.1, 3.2, 3.3 sind glasklare Formkörper erhältlich. Aus dem Polymeren 1.1 ist unter den gleichen Bedingungen kein zusammenhängender Formkörper erhältlich.

**Patentansprüche**

1. Polymerlegierungen aus
   a) 30 bis 50 Gew.-% eines Copolymerisats von 35 bis 55 Gew.-% Maleinsäureanhydrid und 65 bis 45 Gew.-% Styrol und
   b) 70 bis 50 Gew.-% eines Copolymerisats von 65 bis 40 Gew.-% Styrol, α-Methylstyrol oder Mischungen davon und 35 bis 60 Gew.-% Acrylnitril.

**Europäisches Patentamt**

# EUROPÄISCHER RECHERCHENBERICHT

Nummer der Anmeldung

**EP 91 11 0327**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 137 296 (BASF) <br> * Ansprüche 1,3-4 * <br> – – – | 1 | C 08 L 25/12 <br> C 08 L 33/20 <br> C 08 L 35/06 |
| X | EP-A-0 201 966 (STAMICARBON) <br> * Ansprüche 1,3,7 * <br> – – – | 1 | |
| X | DE-A-1 950 599 (BASF) <br> * Anspruch 1 * <br> – – – – – | 1 | |

**RECHERCHIERTE SACHGEBIETE (Int. Cl.5)**

C 08 L

Der vorliegende Recherchenbericht wurde für alle Patentansprüche erstellt

| Recherchenort | Abschlußdatum der Recherche | Prüfer |
|---|---|---|
| Den Haag | 01 Oktober 91 | SIEMENS T. |